# EUROPEAN PATENT APPLICATION

(11) **EP 4 236 001 A1**
(43) Date of publication of application: **30.08.2023**
(21) Application number: 21937751.2
(22) Date of filing: 24.12.2021
(51) Int. Cl.: H02J 3/38

(54) **METHOD AND APPARATUS FOR CONTROLLING OPTICAL STORAGE OFF-GRID SYSTEM, CONTROLLER AND STORAGE MEDIUM**

(30) Priority: 23.04.2021 CN 202110446552
(71) Applicant: Xi'an Linchr New Energy Technology Co., Ltd., Xi'an, Shaanxi 710000 (CN)
(72) Inventor: SUN, Yunjie, Xi'an, Shaanxi 710000 (CN); XU, Li, Xi'an, Shaanxi 710000 (CN); HE, Guodong, Xi'an, Shaanxi 710000 (CN); LI, Weibo, Xi'an, Shaanxi 710000 (CN)
(74) Representative: Casalonga
(86) International application number: PCT/CN2021/141372
(87) International publication number: WO 2022/222529

(57) **Abstract**

The present invention provides aoptical storage off-grid system control method and apparatus, a controller and a storage medium, and relates to the technical field of off-grid microgrid control, which includes that: a controller determines, based on State of Charge (SOC) of an energy storage battery, whether an optical storage off-grid system enters a low-capacity operation stage; in response to the optical storage off-grid system being determined to enters the low-capacity operation stage, the controller determines, based on electric meter power at an energy storage contactor, whether a Direct Current to Direct Current (DCDC) converter and a photovoltaic cell panel in the optical storage off-grid system are turned off; and in response to the DCDC converter and the photovoltaic cell panel in the optical storage off-grid system being determined to have been turned off, the controller controls the DCDC current converter and the photovoltaic cell panel to turn off. Based on the present solution, in the case where the energy storage battery is in the state of low-capacity backup power, the optical storage off-grid system are configured to still implement automated operation, and the risk of draining the energy storage battery is reduced, so that the optical storage off-grid system avoids the risk of crashing, and the operation reliability of the optical storage off-grid system is improved.

## Description

### Cross-Reference to Related Application

The present invention claims priority to Chinese Patent Application No. 202110446552.5, filed to the China National Intellectual Property Administration on April 23, 2021 and entitled " Optical Storage Off-Grid System Control Method and Apparatus, Controller and Storage Medium", the entire contents of which are herein incorporated by reference.

### Technical Field

The present invention relates to the technical field of off-grid microgrid control, and in particular to a optical storage off-grid system Control Method and Apparatus, a controller and a storage medium.

### Background

As an easy-to-deploy clean energy power supply system, an optical storage off-grid system can better solve a power supply problem in areas without power or with weak power, and has been widely used in remote mountainous areas, areas without power, islands, communication base stations, street lights and other application places.

A main energy source of the traditional optical storage off-grid system is photovoltaic power generation, and its power generation is greatly affected by light. However, in the case where the photovoltaic power generation is insufficient and an energy storage battery is low in capacity, or in response to the capacity of the photovoltaic power generation is less than the loss of the optical storage off-grid system, the energy storage battery may be in a state of continuous low-power discharge, and the energy storage battery may have a risk of being drained, which may cause the entire optical storage off-grid system to crash and fail to resume operation.

### Summary

The present invention provides a method and apparatus for controlling an optical storage off-grid system, a controller and a storage medium for reducing the risk of draining an energy storage battery, avoiding the risk of crashing of the optical storage off-grid system, and improving the operation reliability of the optical storage off-grid system, thereby at least overcoming the above-mentioned deficiencies in a related art.

At least some embodiments of the present invention provides an optical storage off-grid system Control Method and Apparatus, which is applied to the optical storage off-grid system. The optical storage off-grid system may at least include: a controller, an energy storage battery, an energy storage contactor and a photovoltaic cell panel. The controller may be respectively in communication connection with the energy storage battery and the energy storage contactor. An electric meter may be arranged at the energy storage contactor. The photovoltaic cell panel is arranged to supply power to the energy storage battery via the electric meter at the energy storage contactor. The energy storage battery may be arranged to discharge electricity via the electric meter at the energy storage contactor. including.
determining, by the controller, based on a State of Charge (SOC) of the energy storage battery, whether the optical storage off-grid system enters a low-capacity operation stage;
determining, by the controller, in response to it being determined that the optical storage off-grid system enters the low-capacity operation stage, whether a Direct Current to Direct Current (DCDC) converter and the photovoltaic cell panel in the optical storage off-grid system are turned off based on electric meter power at the energy storage contactor; and
controlling, by the controller, in response to the DCDC converter and the photovoltaic cell panel in the optical storage off-grid system being determined to have been turned off, the DCDC converter and the photovoltaic cell panel to turn off.

In an optional embodiment, wherein determining, by the controller, based on the SOC of the energy storage battery, whether the optical storage off-grid system enters the low-capacity operation stage may include the following operations.
acquiring, by the controller, the SOC of the energy storage battery based in a first preset period;
increasing, by the controller, in response to the value of the SOC of the energy storage battery being less than or equal to a first preset threshold in one first preset period, a value of a first timer by one; decrementing, by the controller, in response to the value of the SOC of the energy storage battery being greater than the first preset threshold in one first preset period, the value of the first timer by one; and
determining, by the controller, whether the optical storage off-grid system enters the low-capacity operation stage based on the value of the first timer.

in an optional embodiment, wherein determining, by the controller, whether the optical storage off-grid system enters the low-capacity operation stage based on the value of the first timer including:.
determining, by the controller, in response to the value of the first timer being greater than or equal to a second preset threshold, that the optical storage off-grid system enters the low-capacity operation stage based on the value of the first timer.

In an optional embodiment, wherein determining, by the controller, based on the electric meter power at the energy storage contactor, whether the DCDC converter and the photovoltaic cell panel in the optical storage off-grid system are turned off including:
determining, by the controller, whether the DCDC converter and the photovoltaic cell panel in the optical storage off-grid system are turned off based on the electric meter power at the energy storage contactor and the number of low-capacity operations, wherein the number of low-capacity operations is used for characterizing the number of times that the optical storage off-grid system is maintained in the low-capacity operation stage.

In an optional embodiment, wherein determining, by the controller, whether the DCDC converter and the photovoltaic cell panel in the optical storage off-grid system are turned off **based on** the electric meter power at the energy storage contactor and the number of low-capacity operations including:
determining, by the controller, whether the number of low-capacity operations is greater than or equal to a preset operation threshold, and determining, in response to the number of low-capacity operations being determined to be greater than or equal to the preset operation threshold, the DCDC converter and the photovoltaic cell panel in the optical storage off-grid system are turned off; and updating, by the controller, in response to the number of low-capacity operations being determined to be less than the preset operation threshold, the number of low-capacity operations based on the electric meter power at the energy storage contactor.

In an optional embodiment, wherein updating, by the controller, the number of low-capacity operations based on the electric meter power at the energy storage contactor comprises.
determining, by the controller, based on a second preset period, whether the electric meter power at the energy storage contactor is greater than a preset power threshold;
decrementing, by the controller, in response to the electric meter power at the energy storage contactor being greater than the preset power threshold in one second preset period, a value of a second timer by one; increasing, by the controller, in response to the electric meter power at the energy storage contactor being less than or equal to the preset power threshold in one second preset period, the value of the second timer by one; and
increasing, in response to the second timer being greater than a third preset threshold, the number of low-capacity operations by one.

In an optional embodiment, wherein determining, by the controller, whether the electric meter power at the energy storage contactor is greater than the preset power threshold comprises.
determining, by the controller, in response to a communication state between the energy storage battery and the electric meter being normal, whether the electric meter power at the energy storage contactor is greater than the preset power threshold.

An embodiment of present invention further provide an apparatus for controlling an optical storage off-grid system, which is applied to the optical storage off-grid system. The optical storage off-grid system may at least include: a controller, an energy storage battery, an energy storage contactor and a photovoltaic cell panel. The controller may be respectively in communication connection with the energy storage battery and the energy storage contactor. An electric meter may be arranged at the energy storage contactor. The photovoltaic cell panel is arranged to supply power to the energy storage battery via the electric meter at the energy storage contactor. The energy storage battery is arranged to discharge electricity via the electric meter at the energy storage contactor. The apparatus may include: a determination module and a control module.
the determination module , configured to enable the controller to determine, based on a SOC of the energy storage battery, whether the optical storage off-grid system enters a low-capacity operation stage, and in response to the optical storage off-grid system being determined to enter the low-capacity operation stage, enable the controller to determine, based on electric meter power at the energy storage contactor, whether a DCDC converter and the photovoltaic cell panel in the optical storage off-grid system are turned off.

The control module , configured to enable, in response to the DCDC converter and the photovoltaic cell panel in the optical storage off-grid system being determined to have been turned off, the controller to control the DCDC converter and the photovoltaic cell panel to turn off.

In an optional embodiment the determination module may also be configured to perform the following operations.
enable the controller to acquire the controller acquires the SOC of the energy storage battery in a first preset period.
enable the controller to increase, in response to the value of the SOC of the energy storage battery being less than or equal to a first preset threshold in one first preset period, the controller increases a value of a first timer by one. in response to the value of the SOC of the energy storage battery being greater than the first preset threshold in one first preset period, the controller decrements the value of the first timer by one.

The controller determines whether the optical storage off-grid system enters the low-capacity operation stage based on the value of the first timer.

In an optional embodiment,, the determination module may also be configured to perform the following operation.
enable the controller to determine, in response to the value of the first timer being greater than or equal to a second preset threshold, the controller determines that the optical storage off-grid system enters the low-capacity operation stage based on the value of the first timer.

In an optional embodiment, the determination module may also be configured to perform the following operation.
enable the controller to determine, based on the electric meter power at the energy storage contactor, whether the DCDC converter and the photovoltaic cell panel in the optical storage off-grid system are turned off may include the following operation.

The controller determines whether the DCDC converter and the photovoltaic cell panel in the optical storage off-grid system are turned off based on the electric meter power at the energy storage contactor and the number of low-capacity operations. The number of low-capacity operations is used for characterizing the number of times that the optical storage off-grid system is maintained in the low-capacity operation stage.

In an optional embodiment, the determination module may also be configured to perform the following operation.
the controller determines whether the number of low-capacity operations is greater than or equal to a preset operation threshold, and determines, in response to the number of low-capacity operations being determined to be greater than or equal to the preset operation threshold, the DCDC converter and the photovoltaic cell panel in the optical storage off-grid system are turned off; and in response to the number of low-capacity operations being determined to be less than the preset operation threshold, the controller updates the number of low-capacity operations based on the electric meter power at the energy storage contactor.

In an optional embodiment, the determination module may also be configured to perform the following operations.
enable the controller to determine, based on a second preset period, whether the electric meter power at the energy storage contactor is greater than a preset power threshold.
enable the controller to decrement, in response to the electric meter power at the energy storage contactor being greater than the preset power threshold in one second preset period, the controller decrements a value of a second timer by one. in response to the electric meter power at the energy storage contactor being less than or equal to the preset power threshold in one second preset period, the controller increases the value of the second timer by one; and increase, in response to the second timer being greater than a third preset threshold, the number of low-capacity operations by one.

In an optional embodiment, the determination module may also be configured to perform the following operation.
enable the controller to determine, in response to a communication state between the energy storage battery and the electric meter being normal, the controller determines whether the electric meter power at the energy storage contactor is greater than the preset power threshold.

An embodiment of present invention present invention also provide a controller. The controller may including: a processor, a storage medium and a bus. The storage medium is configured to store at least one machine-readable instruction executing by the at least one processor. In response to the controller runs, the processor is configured to communicate with the storage medium through the bus, and the at least one processor is configured to execute the at least on machine-readable instruction to execute the steps of the method for controlling the optical storage off-grid system provided as claimed in the above-mentioned embodiments.

An embodiment of present invention further provide a computer readable storage medium, and a computer program is stored on the computer readable storage medium. In response to running by at least one processor, the computer program is configured to executes the steps of the method for controlling the optical storage off-grid system provided based on the above-mentioned embodiments.

The present invention at least has the following beneficial effects.

The embodiments of the present invention provide the method and apparatus for controlling the optical storage off-grid system, the controller and the storage medium. The method including: determining, by the controller, based on the State of Charge (SOC) of the energy storage battery, whether the optical storage off-grid system enters a low-capacity operation stage; determining, by the controller, in response to it being determined that the optical storage off-grid system enters the low-capacity operation stage, whether a Direct Current to Direct Current (DCDC) converter and the photovoltaic cell panel in the optical storage off-grid system are turned off based on electric meter power at the energy storage contactor; and controlling, by the controller, in response to it being determined that the DCDC converter and the photovoltaic cell panel in the optical storage off-grid system have been turned off, the DCDC converter and the photovoltaic cell panel to turn off. It is determined that the DCDC converter and the photovoltaic cell panel in the optical storage off-grid system have been turned off, the controller controls the DCDC converter and the photovoltaic cell panel to turn off immediately to stop working, thus achieving the purpose that the optical storage off-grid system may still implement automated operation in the case where the energy storage battery is in the state of low-capacity backup power, reducing the risk of draining the energy storage battery, avoiding the risk of crashing of the optical storage off-grid system, and improving the operation reliability of the optical storage off-grid system

### Brief Description of the Drawings

In order to more clearly explain the technical solutions of the embodiments of the present invention, the drawings used in the embodiments will be briefly introduced below. It is to be understood that the following drawings only illustrate some embodiments of the present invention, which therefore should not be regarded as limitations to the scope. For those of ordinary skill in the art, other related drawings may also be obtained in accordance with these drawings without creative efforts.
Fig. 1 is a schematic structural diagram of an optical storage off-grid system based on an embodiment of the present application.
Fig. 2 is a schematic flowchart of a method for controlling an optical storage off-grid system based on an embodiment of the present invention.
Fig. 3 is a schematic flowchart of another method for controlling an optical storage off-grid system based on an embodiment of the present invention.
Fig. 4 is a schematic flowchart of yet another method for controlling an optical storage off-grid system based on an embodiment of the present invention.
Fig. 5 is an overall schematic flowchart of a method for controlling an optical storage off-grid system based on an embodiment of the present invention.
Fig. 6 is a schematic structural diagram of an apparatus for controlling an optical storage off-grid system based on an embodiment of the present invention.
Fig. 7 is a schematic structural diagram of a controller based on an embodiment of the present invention.

Reference signs: 100- optical storage off-grid system; 101- controller; 102- energy storage battery; 103- energy storage contactor; and 104- photovoltaic cell panel.

### Detailed Description

In order to make the purposes, technical solutions and advantages of the embodiments of the present invention clearer, the technical solutions in the embodiments of the present invention will be described clearly and completely below with reference to the accompanying drawings in the embodiments of the present invention. It is to be understood that the drawings are only for the purpose of illustration and description, and are not used to limit the scope of protection of the present invention. In addition, it is to be understood that the schematic drawings are not drawn to scale. The flowcharts used in the present invention illustrate operations implemented in accordance with some embodiments of the present invention. It is to be understood that the operations of the flowcharts may be performed out of order and the steps without logical context may be performed in reverse order or concurrently. In addition, those skilled in the art can add at least one other operations to the flowchart, and can also remove at least one operations from the flowchart under the guidance of the content of the present invention.

In addition, the described embodiments are only a part but not all of the embodiments of the present invention. Components of the embodiments of the present invention generally described and illustrated here in the drawings may be arranged and designed in various different configurations. Therefore, the following detailed descriptions of the embodiments of the present invention provided in the drawings are not intended to limit the scope of the claimed invention, but only represent selected embodiments of the invention. All other embodiments obtained by those skilled in the art based on the embodiments in the invention without creative work shall fall within the scope of protection of the invention.

It should be noted that the term "comprising" and "including" will be used in the embodiments of the present invention to indicate the existence of the features declared later, but does not exclude the addition of other features.

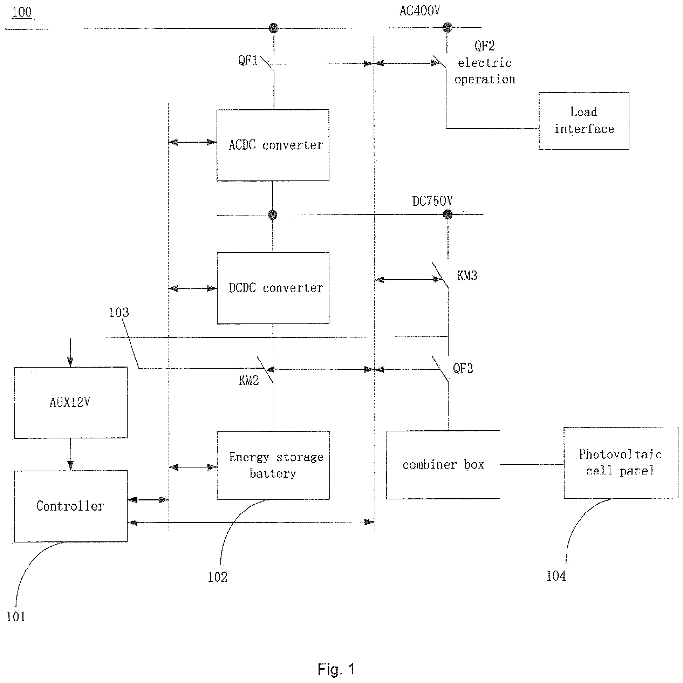

Fig. 1 is a schematic structural diagram of an optical storage off-grid system based on an embodiment of the present application. As shown in Fig. 1, the optical storage off-grid system 100 may include: a controller 101, an energy storage battery 102, an energy storage contactor KM2 (i.e., an energy storage contactor 103) and a photovoltaic cell panel 104.

In addition, the optical storage off-grid system 100 may also include other components, and may also be classified based on the categories of the components, such as including input and output power distribution, a power conversion unit, an optical storage unit, a secondary power supply system AUX12, etc.
1. The input and output power distribution may include: an Alternating Current to Direct Current (ACDC) circuit breaker QF1, a load circuit breaker QF2, a photovoltaic circuit breaker QF3, an optical storage contactor KM3 and an energy storage contactor KM2. Each QF and each KM are provided with an electric meter, data such as voltage, current and power may be collected through the set electric meter, and each electric meter is in communication connection with the controller 101, and sends the collected data to the controller 101.
2. The power conversion unit may include: an ACDC converter and a DCDC converter. The ACDC converter and the DCDC converter are respectively configured to convert the power generated in the optical storage off-grid system 100.
3. The optical storage unit may include: an energy storage battery 102, a photovoltaic cell panel 104 and a combiner box. The energy storage battery 102 is configured to store electric energy generated by the photovoltaic cell panel 104, and the combiner box may include: photovoltaic power distribution and an output anti-reverse diode.
4. The secondary power supply system AUX12 may use three power supply modes such as AC400V, the photovoltaic cell panel and DC750V, and the DC750V power supply may be implemented in response to KM3 is closed.

The working principle of the optical storage off-grid system 100 is briefly introduced as follows.

In response toin an initialization state, the circuit breakers QF1, QF2 and QF3 in the optical storage off-grid system 100 are in a closed state. When in an operation state, the controller 101 sends a closing command to the energy storage contactor KM2 to control the KM2 to close, and the DCDC converter battery side supplies power. The controller 101 communicates with the DCDC converter using RS-485, the DCDC converter is set to work in a bus constant voltage mode (DC750V side constant voltage), the output voltage value is set, and a start-up command is issued.

After the bus voltage is established, the controller 101 sends closing to the optical storage contactor KM3 to control the optical storage contactor KM3 to close, the photovoltaic cell panel 104 provides energy to the energy storage battery 102 through the combiner box and the DCDC converter, and the controller 101 tracks the maximum power of the photovoltaic cell panel 104 using a photovoltaic power tracking algorithm. If the capacity of the energy storage battery 102 can meet the condition for supplying power to another device (such as the SOC of the energy storage battery 102> 25%), the working state of the ACDC converter is set to an inverter voltage regulation mode (AC400V constant voltage), the output voltage value is set, the start-up command is issued, and alternating current is output to supply power to a load.

In the present embodiment, it is mainly aimed at how to implement the automated operation of the optical storage off-grid system 100 in response to the energy storage battery 102 has the low-capacity backup power, and reduce the risk of draining the energy storage battery 102, to avoid the risk of crashing of the optical storage off-grid system 100.

The controller 101 may be in communication connection with the energy storage battery 102 and the energy storage contactor KM2, respectively, the electric meter may be arranged at the energy storage contactor KM2, the photovoltaic cell panel 104 may supply power to the energy storage battery 102 via the electric meter at the energy storage contactor KM2, and the energy storage battery 102 may discharge electricity via the electric meter at the energy storage contactor 103.

Therefore, in the present embodiment, data such as voltage, current or power flowing out of or flowing into the energy storage battery 102 may be collected through the electric meter arranged at the energy storage contactor KM2, and the controller 101 may determine, based on the data such as the voltage, current or power collected by the electric meter and the SOC of the energy storage battery 102, whether the energy storage battery 102 is in the state of low-capacity backup power. If it is determined that the energy storage battery 102 is in the state of low-capacity backup power, the controller controls the DCDC converter and the photovoltaic cell panel to turn off immediately, or notifies a worker to take other measures to reduce the risk of draining the energy storage battery 102, avoid the risk of crashing of the optical storage off-grid system 100, and improve the operation reliability of the entire system.

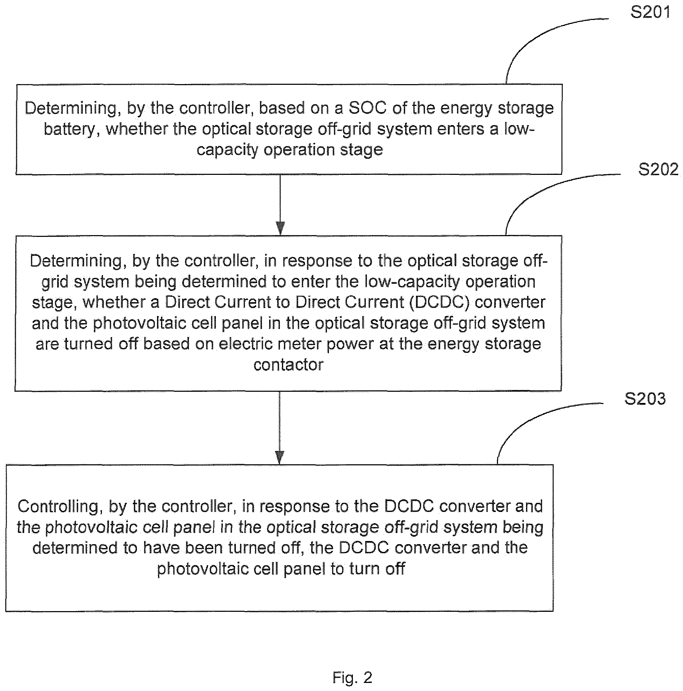

Fig. 2 is a schematic flowchart of a method for controlling an optical storage off-grid system based on an embodiment of the present invention. The execution subject of the method may be the controller in the above-mentioned Fig. 1. As shown in Fig. 2, the method may include the following operations.

In step S201, determining, by the controller, based on a SOC of the energy storage battery, whether the optical storage off-grid system enters a low-capacity operation stage.

The SOC of the energy storage battery refers to an available state of the remaining charge in the battery, that is, the SOC of the energy storage battery is a ratio of the remaining charge allowance to a rated charge capacity of the battery. in response to SOC =0, it means that the energy storage battery is fully discharged, and in response to SOC =1, it means that the energy storage battery is fully charged.

Therefore, in the present embodiment, the controller may be in communication connection with the energy storage battery, the controller may acquire the SOC of the energy storage battery in real time, and learn the current remaining capacity of the energy storage battery based on the SOC of the energy storage battery, and then it may be determined whether the optical storage off-grid system enters the low-capacity operation stage. SOC data is collected, and if the communication is abnormal, timeout judgment logic is performed. If the communication does not time out, exiting is performed. If the communication times out, fault shutdown is performed.

In step S202, determining, by the controller, in response to the optical storage off-grid system being determined to enter the low-capacity operation stage, whether a Direct Current to Direct Current (DCDC) converter and the photovoltaic cell panel in the optical storage off-grid system are turned off based on electric meter power at the energy storage contactor.

The data such as the current and voltage of the energy storage battery may be collected by means of the electric meter arranged at the energy storage contactor KM2, and the power at the energy storage contactor KM2 is calculated based on the collected current and voltage.

On the basis of the above embodiment, if it is determined based on the SOC of the energy storage battery that the optical storage off-grid system has entered the low-capacity operation stage, it is necessary to acquire the charging (or discharging) power data of the energy storage battery collected by the electric meter at the energy storage contactor KM2 in time, and to determine, based on the charging (or discharging) power of the energy storage battery, whether the energy storage battery is at risk of being drained.

In other realizable manners, the charging (or discharging) current data of the energy storage battery may also be collected by the electric meter at the energy storage contactor KM2, and whether the energy storage battery is at risk of being drained is determined based on the charging (or discharging) current of the energy storage battery.

If it is determined based on the power data that the energy storage battery is at risk of being drained, it may be determined that the DCDC converter and the photovoltaic cell panel in the optical storage off-grid system need to be turned off immediately to stop working, thus reducing the risk of draining the energy storage battery and enabling the entire optical storage off-grid system to avoid the risk of crashing.

In step S203,controlling, by the controller, in response to the DCDC converter and the photovoltaic cell panel in the optical storage off-grid system being determined to have been turned off, the DCDC converter and the photovoltaic cell panel to turn off.

On the basis of the above embodiment, in response to the DCDC converter and the photovoltaic cell panel in the optical storage off-grid system being determined to be turned off, the controller may send a disconnection command to the energy storage contactor KM2, and then control the DCDC converter and the photovoltaic cell panel to turn off to stop working. Thus, continuous low-power discharge of the energy storage battery may be effectively avoided from resulting in the risk of draining the energy storage battery. Meanwhile, effective power supply of the optical storage microgrid system in the areas without power or with weak power is further facilitated, and the operation reliability of the optical storage off-grid system is improved.

In the present embodiment, with the SOC and power of the energy storage battery as the judgment basis, the situation that in the case where the energy storage battery has the low-capacity backup power, the optical storage off-grid system may still implement automated operation is effectively solved, and the risk of draining the energy storage battery is reduced, so that the optical storage off-grid system avoids the risk of crashing, and the operation reliability of the optical storage off-grid system is improved.

In conclusion, the embodiments of the present invention provide the method for controlling the optical storage off-grid system. The method may include that: the controller determines, based on the SOC of the energy storage battery, whether the optical storage off-grid system enters the low-capacity operation stage; if it is determined that the optical storage off-grid system enters the low-capacity operation stage, the controller determines, based on the electric meter power at the energy storage contactor, whether the DCDC converter and the photovoltaic cell panel in the optical storage off-grid system are turned off; and in response to it being determined that the DCDC converter and the photovoltaic cell panel in the optical storage off-grid system have been turned off, the controller controls the DCDC converter and the photovoltaic cell panel to turn off. In the present solution, the SOC and power of the energy storage battery are used as the judgment basis, and based on the SOC of the energy storage battery, it is determined whether the optical storage off-grid system enters the low-capacity operation stage, in response to it being determined that the optical storage off-grid system enters the low-capacity operation stage, based on the charging (or discharging) power of the energy storage battery collected by the electric meter at the energy storage contactor, it is determined whether the DCDC converter and the photovoltaic cell panel in the optical storage off-grid system are turned off. It is determined that the DCDC converter and the photovoltaic cell panel in the optical storage off-grid system have been turned off, the controller controls the DCDC converter and the photovoltaic cell panel to turn off immediately to stop working, thus achieving the purpose that the optical storage off-grid system may still implement automated operation in the case where the energy storage battery has the low-capacity backup power, reducing the risk of draining the energy storage battery, avoiding the risk of crashing of the optical storage off-grid system, and improving the operation reliability of the optical storage off-grid system.

Detailed explanation is made to how the controller determines, based on the SOC of the energy storage battery of the optical storage off-grid system, whether the optical storage off-grid system enters the low-capacity operation stage in accordance with the following embodiments.

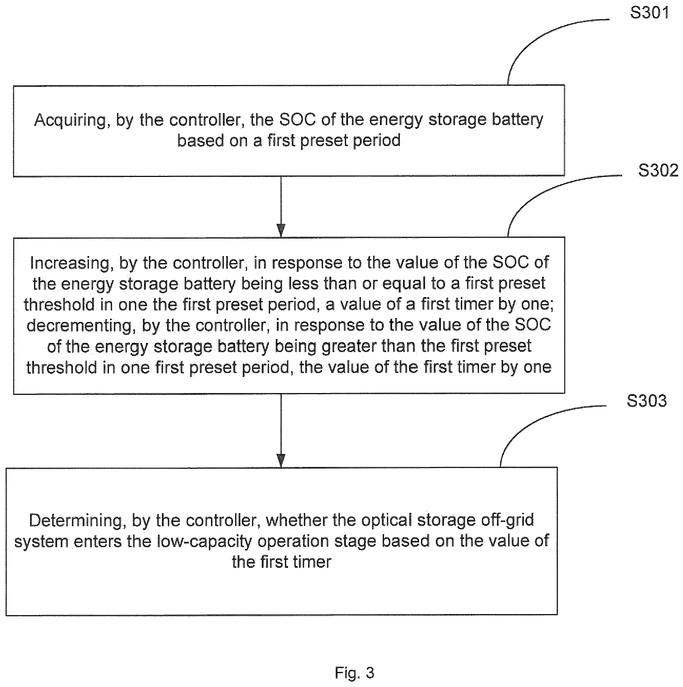

Fig. 3 is a schematic flowchart of another method for controlling an optical storage off-grid system based on an embodiment of the present invention. The above step S201 that the controller determines, based on the SOC of the energy storage battery of the optical storage off-grid system, whether the optical storage off-grid system enters the low-capacity operation stage may include the following operations.

In step S301, acquiring, by the controller, the SOC of the energy storage battery in a first preset period.

In order to improve the efficiency and accuracy of acquiring the SOC of the energy storage battery, the controller may acquire the SOC of the energy storage battery based on the first preset period.

In the present embodiment, for example, the first preset period may be 1 second, and the controller acquires the SOC of the energy storage battery based on a period of 1 second.

In step S302, increasing, by the controller, in response to the value of the SOC of the energy storage battery being less than or equal to a first preset threshold in one the first preset period, a value of a first timer by one; decrementing, by the controller, in response to the value of the SOC of the energy storage battery being greater than the first preset threshold in one first preset period, the value of the first timer by one.

For example, the value of the first preset threshold may be 20%, indicating that the current ratio of the SOC of the energy storage battery to the rated charge capacity of the energy storage battery is 20%, which is used for characterizing a critical point where the SOC of the energy storage battery is in a low-capacity state.

In some realizable manners, if the communication between the controller and the energy storage battery is abnormal, the timeout judgment logic is performed. If the communication does not time out, the timeout judgment logic is exited. If the communication times out, fault shutdown is performed.

In other realizable manners, in response to the communication between the controller and the energy storage battery is normal, it is determined whether the SOC value of the energy storage battery is less than or equal to 20% in one period. If it is determined that the SOC value of the energy storage battery is less than or equal to 20% in one period, the controller increases the value of the first timer N1 by one. If it is determined that the SOC value of the energy storage battery is greater than 20% in one period, the controller decrements the value of the first timer N1 by one, and a low-capacity operation flag is zero-cleared.

In step S303, determining, by the controller, whether the optical storage off-grid system enters the low-capacity operation stage based on the value of the first timer.

Optionally, the operation that the controller determines whether the optical storage off-grid system enters the low-capacity operation stage based on the value of the first timer may include the following operation.
in response to the value of the first timer is greater than or equal to a second preset threshold, the controller determines that the optical storage off-grid system enters the low-capacity operation stage based on the value of the first timer.

In the implementation, a 30min judgment value is adopted. Since the timer is 1s, the corresponding second preset threshold value is 1800s, and the corresponding upper and lower limits of the first timer N1 are 0-1800s.

On the basis of the above embodiment, if the first timer N1 is greater than or equal to 1800, it may be determined that the optical storage off-grid system enters the low-capacity operation stage, the first timer N1 is zero-cleared, and the low-capacity operation flag is set to 1, and the current low-capacity operation judgment processing is exited.

If the first timer N1 is less than 1800, the current low-capacity operation judgment processing is exited.

Detailed explanation is made in accordance with the following embodiments to how the controller determines whether the DCDC converter and the photovoltaic cell panel in the optical storage off-grid system are turned off based on the electric meter power at the energy storage contactor.

Optionally, the operation that the controller determines, based on the electric meter power P_KM2 at the energy storage contactor KM2, whether the DCDC converter and the photovoltaic cell panel in the optical storage off-grid system are turned off may include the following operation.

The controller determines whether the DCDC converter and the photovoltaic cell panel in the optical storage off-grid system are turned off based on the electric meter power P_KM2 at the energy storage contactor KM2 and the number N3 of low-capacity operations.

The number N3 of low-capacity operations may be used for characterizing the number of times that the optical storage off-grid system is maintained in the low-capacity operation stage.

In the present embodiment, only after determining whether the energy storage battery is in the low-capacity operation stage based on the low-capacity operation flag can the controller further determine whether the DCDC converter and the photovoltaic cell panel in the optical storage off-grid system are turned off based on the electric meter power P_KM2 at the energy storage contactor KM2 and the numbers N3 of low-capacity operations.

For example, if the low-capacity operation flag is 1, it may be determined that the energy storage battery is in the low-capacity operation stage. Meanwhile, it is necessary to further determine whether the DCDC converter and the photovoltaic cell panel in the optical storage off-grid system are turned off to realize the protection of the energy storage battery in low-capacity operation and avoid the risk of draining the energy storage battery.

For another example, if the low-capacity operation flag is 0, it may be determined that the energy storage battery is in a non-low-capacity operation stage, and there is no need to further determine whether the DCDC converter and the photovoltaic cell panel in the optical storage off-grid system are turned off.

Optionally, the controller determines whether the number of low-capacity operations is greater than or equal to a preset operation threshold, and determines, if it is determined that the number of low-capacity operations is greater than or equal to the preset operation threshold, the DCDC converter and the photovoltaic cell panel in the optical storage off-grid system are turned off; and if it is determined that the number of low-capacity operations is less than the preset operation threshold, the controller updates the number of low-capacity operations based on the electric meter power at the energy storage contactor.

The value of the present operation threshold may be 3.

For example, if the number N3 of low-capacity operations is 4, it may be determined that the number N3 of starts of low-capacity operations >=3, the controller controls the optical storage off-grid system to immediately enter a fault shutdown state, so that the DCDC converter and the photovoltaic cell panel in the optical storage off-grid system are turned off and stop working.

For another example, if the number N3 of low-capacity operations is 1, it may be determined that the number N3 of starts of low-capacity operations =<3, and the controller controls the KM2 and KM3 to close to start the DCDC converter and the photovoltaic cell panel, tracks the maximum power of the photovoltaic cell panel by adjusting the voltage of the DCDC converter at the 750V side, and updates the number N3 of low-capacity operations based on the electric meter power P_KM2 at the energy storage contactor, to realize the control of the energy storage in response to the battery operates at a low capacity.

Detailed explanation is made in accordance with the following embodiments to how the controller updates the number of low-capacity operations based on the electric meter power at the energy storage contactor.

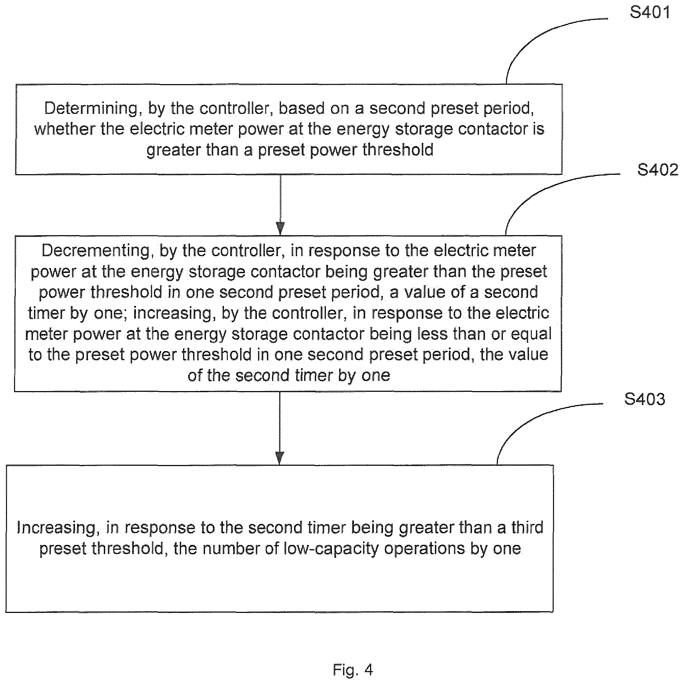

Fig. 4 is a schematic flowchart of yet another method for controlling an optical storage off-grid system based on an embodiment of the present invention. As shown in Fig. 4, the operation that the controller updates the number of low-capacity operations based on the electric meter power at the energy storage contactor may include the following operations.

In step S401, determining, by the controller, based on a second preset period, whether the electric meter power at the energy storage contactor is greater than a preset power threshold.

In the present embodiment, for example, the second preset period may also be 1 second, and the controller determines the electric meter power P_KM2 at the energy storage contactor KM2 based on a period of 1 second.

Optionally, the operation that the controller determines whether the electric meter power at the energy storage contactor is greater than the preset power threshold may include the following operation.

In some realizable manners, for example, in response to the communication state between the controller and the energy storage battery is abnormal, communication timeout judgment logic is performed. If the communication does not time out, exiting is performed. If the communication times out, fault shutdown is performed.

In other realizable manners, for example, in response to the communication state between the controller and the energy storage battery is normal, the controller determines whether the electric meter power P_KM2 at the energy storage contactor KM2 is greater than the preset power threshold.

In step S402, decrementing, by the controller, in response to the electric meter power at the energy storage contactor being greater than the preset power threshold in one second preset period, a value of a second timer by one; increasing, by the controller, in response to the electric meter power at the energy storage contactor being less than or equal to the preset power threshold in one second preset period, the value of the second timer by one.

The value of the preset power threshold Pth is 200W, and the power flowing into the energy storage battery is the positive direction. For example, if P_KM2>0 is charging, and P_KM2<0 is discharging, setting the preset power threshold Pth to 200W is to consider a certain error of the electric meter; therefore, a certain margin is reserved.

For example, the controller determines whether the power P_KM2 collected by the electric meter at the energy storage contactor KM2 is greater than 200W in one period. If the power P_KM2>200W, it may be determined that the current energy storage battery is in a charging state, and the controller decrements the value of the second timer N2 by one.

If the power P_KM2 is less than or equal to 200W (with a certain margin reserved), it may be determined that the current energy storage battery is in a discharging state, there is a risk of draining the energy storage battery, and the controller increases the value of the second timer N2 by one.

In step S403, increasing, in response to the second timer being greater than a third preset threshold, the number of low-capacity operations by one.

The value of the third preset threshold is 300, the timer is 1s, and the upper limit corresponding to the second timer N2 is 300.

In the above process, if the number N3 of low-capacity operations ≥3, the optical storage off-grid system is in a state of fault shutdown. At this time, although AUX12 has a three-power supply mode, AUX12 can only supply power through the photovoltaic cell panel as AC400 and DC750 have no power at this time, in response to the photovoltaic cell panel does not receive light, AUX12V has no power, in response to the light is restored, the photovoltaic cell panel generates power, and the AUX12 supplies power again. At this time, the first timer, the second timer and a counter for the number of low-capacity operations in the aforementioned process will be zero-cleared after the controller is re-powered.

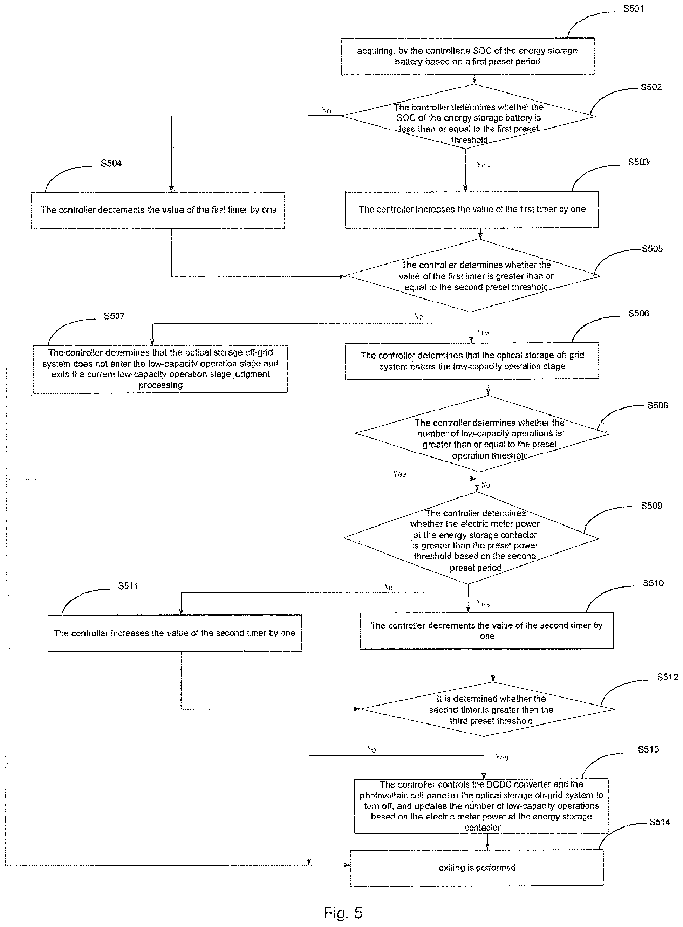

Fig. 5 is an overall schematic flowchart of a method for controlling an optical storage off-grid system based on an embodiment of the present invention. Optionally, as shown in Fig. 5, the method may include the following operations.

In step S501, acquiring, by the controller, a SOC of the energy storage battery based on a first preset period.

In step S502, the controller determines whether the SOC of the energy storage battery is less than or equal to the first preset threshold, in response to the SOC of the energy storage battery is less than or equal to the first preset threshold, jumping to S503, and in response to the SOC of the energy storage battery is greater than the first preset threshold, jumping to S504.

In step S503, the controller increases the value of the first timer by one.

In step S504, the controller decrements the value of the first timer by one.

In step S505, the controller determines whether the value of the first timer is greater than or equal to the second preset threshold, in response to it being determined that the value of the first timer is greater than or equal to the second preset threshold, jumping to S506, and in response to it being determined that the value of the first timer is less than the second preset threshold, jumping to S507.

In step S506, the controller determines that the optical storage off-grid system enters the low-capacity operation stage, jumping to S508.

In step S507, the controller determines that the optical storage off-grid system does not enter the low-capacity operation stage and exits the current low-capacity operation stage judgment processing.

In step S508, the controller determines whether the number of low-capacity operations is greater than or equal to the preset operation threshold, in response to the number of low-capacity operations being determined to be greater than or equal to the preset operation threshold, jumping to S514, and in response to the number of low-capacity operations being determined to be less than the preset operation threshold, jumping to S509.

In step S509, the controller determines whether the electric meter power at the energy storage contactor is greater than the preset power threshold based on the second preset period, in response to the electric meter power at the energy storage contactor being determined to be greater than the preset power threshold, jumping to S510, and in response to the electric meter power at the energy storage contactor being determined to be less than or equal to the preset power threshold, jumping to S511.

In step S510, the controller decrements the value of the second timer by one.

In step S511, the controller increases the value of the second timer by one.

In step S512, it is determined whether the second timer is greater than the third preset threshold, in response to the second timer being determined to be greater than the third preset threshold, jumping to S513, and if the second timer being determined to be less than or equal to the third preset threshold, jumping to S514.

In step S513, the controller controls the DCDC converter and the photovoltaic cell panel in the optical storage off-grid system to turn off, and updates the number of low-capacity operations based on the electric meter power at the energy storage contactor.

In step S514, exiting is performed.

Optionally, the specific implementation of the overall steps of the method for controlling the optical storage off-grid system provided by the embodiment and the beneficial effects produced have been described in detail in the foregoing specific embodiments, and will not be repeated here.

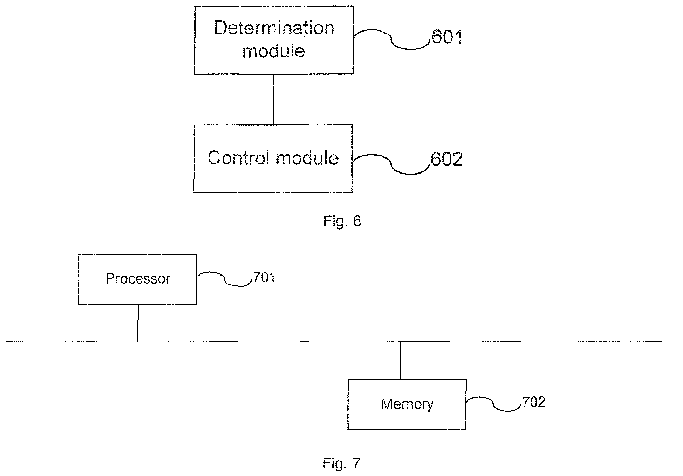

Fig. 6 is a schematic structural diagram of an apparatus for controlling an optical storage off-grid system based on an embodiment of the present invention, applied to the optical storage off-grid system. The optical storage off-grid system may at least include: a controller, an energy storage battery, an energy storage contactor and a photovoltaic cell panel. The controller may be in communication connection with the energy storage battery and the energy storage contactor, respectively. An electric meter may be arranged at the energy storage contactor. The photovoltaic cell panel may supply power to the energy storage battery via the electric meter at the energy storage contactor. The energy storage battery may discharge electricity via the electric meter at the energy storage contactor. As shown in Fig. 6, the apparatus may include: a determination module 601 and a control module 602.

The determination module 601 may be configured to enable the controller to determine, based on the SOC of the energy storage battery, whether the optical storage off-grid system enters a low-capacity operation stage, and in response to the optical storage off-grid system enters the low-capacity operation stage, enable the controller to determine, based on electric meter power at the energy storage contactor, whether a DCDC converter and the photovoltaic cell panel in the optical storage off-grid system are turned off.

The control module 602 may be configured to enable, in response to it is determined that the DCDC converter and the photovoltaic cell panel in the optical storage off-grid system have been turned off, the controller to control the DCDC converter and the photovoltaic cell panel to turn off.

Optionally, the determination module 601 may also be configured to perform the following operations.

The controller acquires the SOC of the energy storage battery based on a first preset period.

If the value of the SOC of the energy storage battery is less than or equal to a first preset threshold in one of the first preset periods, the controller increases the value of a first timer by one. If the value of the SOC of the energy storage battery is greater than the first preset threshold in one of the first preset periods, the controller decrements the value of the first timer by one.

The controller determines whether the optical storage off-grid system enters the low-capacity operation stage based on the value of the first timer.

Optionally, the determination module 601 may also be configured to perform the following operation.

If the value of the first timer is greater than or equal to a second preset threshold, the controller determines that the optical storage off-grid system enters the low-capacity operation stage based on the value of the first timer.

Optionally, the determination module 601 may also be configured to perform the following operation.

The operation that the controller determines, based on the electric meter power at the energy storage contactor, whether the DCDC converter and the photovoltaic cell panel in the optical storage off-grid system are turned off may include the following operation.

The controller determines whether the DCDC converter and the photovoltaic cell panel in the optical storage off-grid system are turned off based on the electric meter power at the energy storage contactor and the number of low-capacity operations. The number of low-capacity operations is used for characterizing the number of times that the optical storage off-grid system is maintained in the low-capacity operation stage.

Optionally, the determination module 601 may also be configured to perform the following operation.

The controller determines whether the number of low-capacity operations is greater than or equal to a preset operation threshold, and determines, if it is determined that the number of low-capacity operations is greater than or equal to the preset operation threshold, the DCDC converter and the photovoltaic cell panel in the optical storage off-grid system are turned off; and if it is determined that the number of low-capacity operations is less than the preset operation threshold, the controller updates the number of low-capacity operations based on the electric meter power at the energy storage contactor.

Optionally, the determination module 601 may also be configured to perform the following operations.

The controller determines, based on a second preset period, whether the electric meter power at the energy storage contactor is greater than a preset power threshold.

If the electric meter power at the energy storage contactor is greater than the preset power threshold in one second preset period, the controller decrements the value of a second timer by one. If the electric meter power at the energy storage contactor is less than or equal to the preset power threshold in one second preset period, the controller increases the value of the second timer by one.

If the second timer is greater than a third preset threshold, the number of low-capacity operations is increased by one.

Optionally, the determination module 601 may also be configured to perform the following operation.
in response to the communication state between the energy storage battery and the electric meter is normal, the controller determines whether the electric meter power at the energy storage contactor is greater than the preset power threshold.

The above apparatus is used to execute the method provided by the foregoing embodiments, and its implementation principle and technical effect are similar, which are not elaborated here.

The above modules may be at least one integrated circuits configured to implement the above method, for example, at least one Application Specific integrated Circuits (ASICs), or at least one Digital Signal Processors (DSPs), or at least one Field Programmable Gate Arrays (FPGAs), etc. For another example, in response to one of the above modules is implemented in the form of a processing element scheduling program code, the processing element may be a general-purpose processor, such as a Central Processing Unit (CPU) or another processor that can call the program code. For another example, these modules may be integrated together and implemented in the form of a System-on-a-Chip (SOC).

Fig. 7 is a schematic structural diagram of a controller based on an embodiment of the present invention. The controller may be integrated in a control device or a chip of the control device, and the controller may be the controller in the above-mentioned optical storage off-grid system.

The controller may include: a processor 701 and a memory 702.

The memory 702 may be used to store a program, and the processor 701 calls the program stored in the memory 702 to execute the above method embodiments. The specific implementation manner and technical effect are similar, which are not elaborated here.

Optionally, the present invention further provides a program product, such as a computer-readable storage medium. The program product may include a program, and in response to executed by a processor, the program is used to execute the above method embodiments.

In the several embodiments provided in the application, it should be understood that the disclosed apparatus and method may be implemented in other manners. For example, the apparatus embodiments described above are only schematic. For example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, namely they may be located in the same place, or may be distributed to multiple network units. Part or all of the units may be selected to achieve the purposes of the solutions of the embodiments based on a practical requirement.

In addition, each function unit in each embodiment of the application may be integrated into a processing unit, or each unit may exist independently, or two or more than two units may also be integrated into a unit. The integrated unit may be implemented in a hardware form and may also be implemented in form of hardware and software functional unit.

The integrated unit realized in form of software functional unit may be stored in a computer-readable storage medium. The above-mentioned software functional unit is stored in a storage medium, and includes a plurality of instructions to enable a computer device (which may be a personal computer, a server, or a network device, etc.) or a processor to execute some steps of the method described in various embodiments of the application. The foregoing storage medium includes: any medium that can store program code, such as a USB flash drive, a removable hard disk, a Read - Only Memory (ROM), a Random Access Memory (RAM), a magnetic disk, or an optical disc.

### Industrial Applicability

The present invention provides a method and apparatus for controlling an optical storage off-grid system, a controller and a storage medium. The method includes that: a controller determines, based on the SOC of an energy storage battery, whether an optical storage off-grid system enters a low-capacity operation stage; if it is determined that the optical storage off-grid system enters the low-capacity operation stage, the controller determines, based on electric meter power at an energy storage contactor, whether a DCDC converter and a photovoltaic cell panel in the optical storage off-grid system are turned off; and if it is determined that the DCDC converter and the photovoltaic cell panel in the optical storage off-grid system have been turned off, the controller controls the DCDC converter and the photovoltaic cell panel to turn off. Based on the present solution, in the case where the energy storage battery is in the state of low-capacity backup power, the optical storage off-grid system may still implement automated operation, and the risk of draining the energy storage battery is reduced, so that the optical storage off-grid system avoids the risk of crashing, and the operation reliability of the optical storage off-grid system is improved.

In addition, it is to be understood that the method and apparatus for controlling the optical storage off-grid system, the controller and the storage medium in the present invention are reproducible and can be used in various industrial applications. For example, the method and apparatus for controlling the optical storage off-grid system, the controller and the storage medium in the present invention may be used in the technical field of off-grid microgrid control

## Claims

1. A method for controlling an optical storage off-grid system, applied to the optical storage off-grid system, the optical storage off-grid system at least comprising: a controller, an energy storage battery, an energy storage contactor and a photovoltaic cell panel, wherein the controller is respectively in communication connection with the energy storage battery and the energy storage contactor, an electric meter is arranged at the energy storage contactor, the photovoltaic cell panel is arranged to supply power to the energy storage battery via the electric meter at the energy storage contactor, and the energy storage battery is arranged to discharge electricity via the electric meter at the energy storage contactor, wherein the method comprises:
determining, by the controller, based on a State of Charge (SOC) of the energy storage battery, whether the optical storage off-grid system enters a low-capacity operation stage;
determining, by the controller, in response to the optical storage off-grid system being determined to enter the low-capacity operation stage, whether a Direct Current to Direct Current (DCDC) converter and the photovoltaic cell panel in the optical storage off-grid system are turned off based on electric meter power at the energy storage contactor; and
controlling, by the controller, in response to the DCDC converter and the photovoltaic cell panel in the optical storage off-grid system being determined to have been turned off, the DCDC converter and the photovoltaic cell panel to turn off.

2. The method as claimed in claim 1, wherein determining, by the controller, based on the SOC of the energy storage battery, whether the optical storage off-grid system enters the low-capacity operation stage comprises:
acquiring, by the controller, the SOC of the energy storage battery in a first preset period;
increasing, by the controller, in response to the value of the SOC of the energy storage battery being less than or equal to a first preset threshold in one first preset period, a value of a first timer by one; decrementing, by the controller, in response to the value of the SOC of the energy storage battery being greater than the first preset threshold in one first preset period, the value of the first timer by one; and
determining, by the controller, whether the optical storage off-grid system enters the low-capacity operation stage based on the value of the first timer.

3. The method as claimed in claim 2, wherein determining, by the controller, whether the optical storage off-grid system enters the low-capacity operation stage based on the value of the first timer comprises:
determining, by the controller, in response to the value of the first timer being greater than or equal to a second preset threshold, that the optical storage off-grid system enters the low-capacity operation stage based on the value of the first timer.

4. The method as claimed in any one of claims 1 to 3, wherein determining, by the controller, based on the electric meter power at the energy storage contactor, whether the DCDC converter and the photovoltaic cell panel in the optical storage off-grid system are turned off comprises:
determining, by the controller, whether the DCDC converter and the photovoltaic cell panel in the optical storage off-grid system are turned off based on the electric meter power at the energy storage contactor and the number of low-capacity operations, wherein the number of low-capacity operations is used for characterizing the number of times that the optical storage off-grid system is maintained in the low-capacity operation stage.

5. The method as claimed in claim 4, wherein determining, by the controller, whether the DCDC converter and the photovoltaic cell panel in the optical storage off-grid system are turned off based on the electric meter power at the energy storage contactor and the number of low-capacity operations comprises:
determining, by the controller, whether the number of low-capacity operations is greater than or equal to a preset operation threshold, and determining, in response to the number of low-capacity operations being determined to be greater than or equal to the preset operation threshold, the DCDC converter and the photovoltaic cell panel in the optical storage off-grid system are turned off; and updating, by the controller, in response to the number of low-capacity operations being determined to be less than the preset operation threshold, the number of low-capacity operations based on the electric meter power at the energy storage contactor.

6. The method as claimed in claim 5, wherein updating, by the controller, the number of low-capacity operations based on the electric meter power at the energy storage contactor comprises:
determining, by the controller, based on a second preset period, whether the electric meter power at the energy storage contactor is greater than a preset power threshold;
decrementing, by the controller, in response to the electric meter power at the energy storage contactor being greater than the preset power threshold in one second preset period, a value of a second timer by one; increasing, by the controller, in response to the electric meter power at the energy storage contactor being less than or equal to the preset power threshold in one second preset period, the value of the second timer by one; and
increasing, in response to the second timer being greater than a third preset threshold, the number of low-capacity operations by one.

7. The method as claimed in claim 6, wherein determining, by the controller, whether the electric meter power at the energy storage contactor is greater than the preset power threshold comprises:
determining, by the controller, in response to a communication state between the energy storage battery and the electric meter being normal, whether the electric meter power at the energy storage contactor is greater than the preset power threshold.

8. An apparatus for controlling an optical storage off-grid system, applied to the optical storage off-grid system, the optical storage off-grid system at least comprising: a controller, an energy storage battery, an energy storage contactor and a photovoltaic cell panel, wherein the controller is respectively in communication connection with the energy storage battery and the energy storage contactor, an electric meter is arranged at the energy storage contactor, the photovoltaic cell panel is arranged to supply power to the energy storage battery via the electric meter at the energy storage contactor, and the energy storage battery is arranged to discharge electricity via the electric meter at the energy storage contactor, wherein the apparatus for controlling the optical storage off-grid system comprises: a determination module and a control module, wherein
the determination module, configured to enable the controller to determine, based on a State of Charge (SOC) of the energy storage battery, whether the optical storage off-grid system enters a low-capacity operation stage, and in response to the optical storage off-grid system being determined to enter the low-capacity operation stage, enable the controller to determine, based on electric meter power at the energy storage contactor, whether a Direct Current to Direct Current (DCDC) converter and the photovoltaic cell panel in the optical storage off-grid system are turned off; and
the control module , configured to enable, in response to the DCDC converter and the photovoltaic cell panel in the optical storage off-grid system being determined to have been turned off, the controller to control the DCDC converter and the photovoltaic cell panel to turn off.

9. The apparatus for controlling the optical storage off-grid system as claimed in claim 8, wherein the determination module is further configured to:
enable the controller to acquire the SOC of the energy storage battery in a first preset period;
enable the controller to increase, in response to the value of the SOC of the energy storage battery being less than or equal to a first preset threshold in one first preset period, a value of a first timer by one; enable the controller to decrement, in response to the value of the SOC of the energy storage battery being greater than the first preset threshold in one first preset period, the value of the first timer by one; and
enable the controller to determine whether the optical storage off-grid system enters the low-capacity operation stage based on the value of the first timer.

10. The apparatus for controlling the optical storage off-grid system as claimed in claim 9, wherein the determination module is further configured to:
enable the controller to determine, in response to the value of the first timer being greater than or equal to a second preset threshold, that the optical storage off-grid system enters the low-capacity operation stage based on the value of the first timer.

11. The apparatus for controlling the optical storage off-grid system as claimed in any one of claims 1 to 8, wherein the determination module is further configured to:
enable the controller to determine, based on the electric meter power at the energy storage contactor, whether the DCDC converter and the photovoltaic cell panel in the optical storage off-grid system are turned off, comprising:
determining, by the controller, whether the DCDC converter and the photovoltaic cell panel in the optical storage off-grid system are turned off based on the electric meter power at the energy storage contactor and the number of low-capacity operations, wherein the number of low-capacity operations is used for characterizing the number of times that the optical storage off-grid system is maintained in the low-capacity operation stage.

12. The apparatus for controlling the optical storage off-grid system as claimed in claim 11, wherein the determination module is further configured to:
enable the controller to determine whether the number of low-capacity operations is greater than or equal to a preset operation threshold, and to determine, in response to the number of low-capacity operations being determined to be greater than or equal to the preset operation threshold, the DCDC converter and the photovoltaic cell panel in the optical storage off-grid system are turned off; and enable the controller to update, in response to the number of low-capacity operations being determined to be less than the preset operation threshold, the number of low-capacity operations based on the electric meter power at the energy storage contactor.

13. The apparatus for controlling the optical storage off-grid system as claimed in claim 12, wherein the determination module is further configured to:
enable the controller to determine, based on a second preset period, whether the electric meter power at the energy storage contactor is greater than a preset power threshold;
enable the controller to decrement, in response to the electric meter power at the energy storage contactor being greater than the preset power threshold in one second preset period, a value of a second timer by one; enable the controller to increase, in response to the electric meter power at the energy storage contactor being less than or equal to the preset power threshold in one second preset period, the value of the second timer by one; and
increase, in response to the second timer being greater than a third preset threshold, the number of low-capacity operations by one.

14. The apparatus for controlling the optical storage off-grid system as claimed in claim 13, wherein the determination module is further configured to:
enable the controller to determine, in response to a communication state between the energy storage battery and the electric meter being normal, whether the electric meter power at the energy storage contactor is greater than the preset power threshold.

15. A controller, comprising: a processor, a storage medium and a bus, wherein the storage medium is configured to store at least one machine-readable instruction executable by the processor, and in response to the controller runs, the processor is configured to communicate with the storage medium through the bus, and the processor is configured to execute the at least one machine-readable instruction to execute the steps of the method as claimed in any one of claims 1 to 7.

16. A storage medium, a computer program being stored on the storage medium, wherein in response to running by a processor, the computer program is configured to execute the steps of the method as claimed in any one of claims 1 to 7.
